# EUROPEAN PATENT APPLICATION

(11) **EP 4 636 870 A1**
(43) Date of publication of application: **22.10.2025**
(21) Application number: 24171390.8
(22) Date of filing: 19.04.2024
(51) Int. Cl.: H01M 4/62, H01M 10/052, H01M 10/054, H01M 10/0562

(54) **USE OF ZINC HEXACYANO METALLATES AS SOLID ELECTROLYTES**

(71) Applicant: BASF SE, 67056 Ludwigshafen am Rhein (DE); Karlsruher Institut für Technologie, 76131 Karlsruhe (DE)
(72) Inventor: KARGER, Leonhard, 76131 Karlsruhe (DE); STRAUSS, Florian, 76131 Karlsruhe (DE); MURUGAN, Saravanakumar, 76131 Karlsruhe (DE); BREZESINSKI, Torsten, 76131 Karlsruhe (DE); KONDRAKOV, Aleksandr, 67056 Ludwigshafen am Rhein (DE)
(74) Representative: Eisenführ Speiser

(57) **Abstract**

Described are the use of certain solid materials which are zinc hexacyano metallates as solid electrolytes, especially in a solid-state battery, to a corresponding solid-state battery and parts thereof, as well as to a process of preparing said solid materials and to certain specific solid materials which are zinc hexacyano metallates.

## Description

The present application relates to the use of certain solid materials which are zinc hexacyano metallates as solid electrolytes, especially in a solid-state battery, to a corresponding solid-state battery and parts thereof, as well as to a process of preparing said solid materials and to certain specific solid materials which are zinc hexacyano metallates.

Zinc hexacyano metallates are known as such.

J. Rodríguez-Hernández et al. (Journal of Physics and Chemistry of Solids 68 (2007) 1630-1642) describe the structure of zinc hexacyano metallates Zn₃A₂[Fe(CN)₆]₂ • xH₂O (A = Na, K, Rb, Cs, NH₄) and Zn₃[M(CN)₆]₂ (M = Fe, Co, Ir). Electrochemical properties and applications of said compounds are not disclosed.

Gang Ni et al. (ChemElectroChem 2016, 3, 798 - 804) as well as M. A. Oliver-Tolentino et al. (RSC Adv., 2016, 6, 108627-108634) describe the redox processes of zinc hexacyanoferrate electrodes in an aqueous environment.

There is an ongoing need for alkali metal cation conductors which exhibit suitable ionic conductivity for application as solid electrolyte, especially for solid-state batteries. Especially there is a need for solid electrolytes which offer not only ionic conductivity, but also stability against air and easy processing, and which are obtainable by a facile synthesis.

Further specifically, there is a need for solid electrolytes for sodium-ion solid state batteries. While sodium-ion solid state batteries may not necessarily outperform conventional lithium-ion batteries in all aspects, they offer an alternative having the focus on sustainability, due to abundance of sodium resources.

Thus, in a first aspect, the present disclosure relates to the use of a solid material having a composition according to formula (I)

A₂₋ₓZn₃[M(CN)₆]₂₋ₓ[M'(CN)₆]ₓ (I)

wherein
A is one or more selected from the group consisting of the alkali metals, preferably selected from Li, Na and K, most preferably one selected from Li, Na and K;
M is one or more selected from the group consisting of divalent metals, preferably selected from Fe, Co, Cr and Mn, most preferably Fe;
M' is one or more selected from the group consisting of trivalent metals, preferably selected from Fe, Co, Cr and Mn, most preferably Co;
0 ≤ x < 2, preferably 0 ≤ x≤ 1.5, more preferably 0 ≤ x≤ 1.1
as a solid electrolyte.

Preferably, the alkali metal A in formula (I) is one or more selected from the group consisting of Li, Na and K, most preferably the alkali metal A is one selected from Li, Na and K.

Preferably, the divalent metal M in formula (I) is one or more selected from the group consisting of Fe, Co, Cr and Mn. The most preferred divalent metal M is Fe.

If present, preferably the trivalent metal M' in formula (I) is one or more selected from the group consisting of Fe, Co, Cr and Mn.

Preferably, the solid material has a composition according to formula (I) wherein M is Fe, and M' if present is one or more selected from the group consisting of trivalent metals different from Fe. The most preferred trivalent metal M' is Co.

In case one or more trivalent metals M' are present, 0 < x < 2, preferably 0.5 ≤ x ≤ 1.5, more preferably 0.9 ≤ x ≤ 1.1, most preferably x = 1. Materials having a composition according to formula (I) wherein one or more trivalent metals M' are present (0 < x < 2) are zinc hexacyano metallates having a composition according to formula (la)

A₂₋ₓZn₃[M(CN₆)]₂₋ₓ[M'(CN)₆]ₓ (Ia)

wherein
A is one or more selected from the group consisting of the alkali metals, preferably selected from Li, Na and K, most preferably one selected from Li, Na and K; and
M is one or more selected from the group consisting of divalent metals, preferably selected from Fe, Co, Cr and Mn, most preferably Fe; and
M' is one or more selected from the group consisting of trivalent metals, preferably selected from Fe, Co, Cr and Mn, most preferably Co; and
0 < x < 2, preferably 0.5 ≤ x ≤ 1.5, more preferably 0.9 ≤ x ≤ 1.1.

Thus, in certain cases, a material having a composition according to formula (la) is used as a solid electrolyte.

Preferably, the alkali metal A in formula (la) is one or more selected from the group consisting of Li, Na and K, most preferably the alkali metal A is one selected from Li, Na and K.

Preferably, the divalent metal M in formula (la) is one or more selected from the group consisting of Fe, Co, Cr and Mn. The most preferred divalent metal M is Fe.

Preferably, the trivalent metal M' in formula (la) is one or more selected from the group consisting of Fe, Co, Cr and Mn.

Preferably, the solid material has a composition according to formula (la) wherein M is Fe, and M' is one or more selected from the group consisting of trivalent metals different from Fe. The most preferred trivalent metal M' is Co.

Further preferably, in formula (la)
the alkali metal A is one or more selected from the group consisting of Li, Na and K, most preferably one selected from Li, Na and K; and
the divalent metal M is one or more selected from the group consisting of Fe, Co, Cr and Mn, and
the trivalent metal M' is one or more selected from the group consisting of Fe, Co, Cr and Mn.

Still further preferably, in formula (la)
the alkali metal A is one selected from Li, Na and K; and
the divalent metal M is Fe; and
the trivalent metal M' is different from Fe; and
0.5 ≤ x ≤ 1.5, preferably 0.9 ≤ x ≤ 1.1, most preferably x= 1.

Especially preferably, in formula (la)
the alkali metal A is one selected from Li, Na and K; and
the divalent metal M is Fe; and
the trivalent metal M' is Co; and
0.5 ≤ x ≤ 1.5, preferably 0.9 ≤ x ≤ 1.1, most preferably x = 1.

Specific preferred solid materials having a composition according to formula (la) are KZn₃[Fe(CN₆)][Co(CN)₆], NaZn₃[Fe(CN₆)][Co(CN)₆] and LiZn₃[Fe(CN₆)][Co(CN)₆].

In case no trivalent metal M' is present, x = 0. Materials having a composition according to formula (I) wherein no trivalent metal M' is present (x = 0) are zinc hexacyanometallates (II) (also referred to as zinc hexacyanidometallates (II)) according to formula (lb)

A₂Zn₃[M(CN₆)]₂ (Ib)

wherein
A is one or more selected from the group consisting of the alkali metals, preferably selected from Li, Na and K, most preferably one selected from Li, Na and K; and
M is one or more selected from the group consisting of divalent metals, preferably selected from Fe, Co, Cr and Mn, most preferably Fe.

Thus, in certain cases, a material having a composition according to formula (lb) is used as a solid electrolyte.

Preferably, the alkali metal A in formula (lb) is one or more selected from the group consisting of Li, Na and K, most preferably the alkali metal A is one selected from Li, Na and K.

Preferably, the divalent metal M in formula (lb) is one or more selected from the group consisting of Fe, Co, Cr and Mn. The most preferred divalent metal is Fe.

Further preferably, in formula (lb)
the alkali metal A is one or more selected from the group consisting of Li, Na and K, most preferably one selected from Li, Na and K; and
the divalent metal M is one or more selected from the group consisting of Fe, Co, Cr and Mn.

Still further preferably, in formula (lb)
the alkali metal A is one selected from Li, Na and K; and
the divalent metal M is Fe.

Solid materials having a composition according to formula (lb) wherein M is Fe are zinc hexacyanoferrates (II) (also referred to as zinc hexacyanidoferrates (II) or zinc hexacyanoferrites).

Specific preferred solid materials having a composition according to formula (lb) are K₂Zn₃[Fe(CN₆)]₂, Na₂Zn₃[Fe(CN₆)]₂ and Li₂Zn₃[Fe(CN₆)]₂.

A solid material having a composition according to formula (I) may have a garnet-type structure, more specifically a rhombohedral garnet-type structure, typically with space group R-3c. The garnet structure may be determined by powder X-ray diffraction (XRD) measurements as generally known in the art (for details see examples section below).

Without wishing to be bound by any theory, it is presently assumed than in the solid material having a composition according to formula (I) a three-dimensional open pore structure is formed by the anions [M(CN)₆]⁴⁻ and - if present - [M'(CN)₆]³⁻ form with the Zn²⁺ cations. Said three-dimensional open pore structure capable of intercalating cations of one or more alkali metals A, preferably selected from Li, Na and K.

Moreover, the pores are capable of intercalating water, similar to zeolithes (so called zeolithic water).

It was found that the garnet structure is capable of withstanding mechanical stress, e.g. is capable of withstanding a pressure up to more than 400 MPa as occurring e.g. under cold-pressing.

A solid material having a composition according to formula (I) may have an ionic conductivity of more than 10⁻⁷ S/cm, preferably of more than 10⁻⁶ S/cm, more preferably of 10⁻⁵ S/cm or more, most preferably of 10⁻⁴ S/cm or more. The ionic conductivity is determined in the usual manner known in the field of solid electrolytes development by means of electrochemical impedance spectroscopy (for details see examples section below).

Preferred is the use of a solid material having a composition according to formula (I) as solid electrolyte in a solid-state battery.

In certain cases, the solid-state battery is a sodium-ion solid-state-battery, and the solid electrolyte is a solid material having a composition according to formula (I) wherein A is sodium.

In the use of a solid material having a composition according to formula (I) as solid electrolyte in a solid-state battery, the solid material having a composition according to formula (I) may be incorporated in one or more of the following parts of the solid-state battery:
- a separator
- an anode
- a cathode.

The anode is the electrode of an electrochemical cell where during discharging a net negative charge is occurs and the cathode is the electrode of an electrochemical cell where during discharging a net positive charge occurs.

The separator electronically separates the cathode and an anode from each other in an electrochemical cell.

The anode comprises an anode active material which is electrochemically oxidized upon discharging and the cathode comprises a cathode active material which is electrochemically reduced upon discharging. Suitable electrochemically active cathode materials (cathode active materials) and suitable electrochemically active anode materials (anode active materials) are known in the art, for details see below.

The cathode of a solid-state electrochemical cell usually comprises beside an active cathode material as a further component a solid electrolyte. Also, the anode of a solid state electrochemical cell usually comprises a solid electrolyte as a further component beside an active anode material. Said solid electrolyte may be a solid material having a composition according to formula (I).

In a use of a solid material having a composition according to formula (I) as solid electrolyte in a solid-state battery, wherein the solid material having a composition according to formula (I) is incorporated in the anode, said anode preferably comprises an active material selected from the group consisting of
- an alkali metal,
- a material capable of reversibly plating alkali metal on charging and stripping alkali metal on discharging
- a material capable of reversibly inserting alkali metal on charging and extracting alkali metal on discharging
- a material capable of reversibly intercalating alkali metal cations on charging and deintercalating alkali metal cations on discharging
- an organic conversion material capable of reversibly uptaking electrons and alkali metal cations on charging and releasing electrons and alkali metal cations on discharging.

Preferred alkali metals are Li, Na and K.

The material capable of reversibly plating alkali metal on charging and stripping alkali metal on discharging may be the material of the current collector, typically copper. When using an anode material capable of reversibly plating alkali metal on charging and stripping alkali metal on discharging, in the initial state no alkali metal may be present in the anode. During the initial charging process, alkali metal cations are deintercalated from the cathode active material and electrodeposited (i.e. plated) as metallic alkali metal onto the current collector (e.g. Cu). During the subsequent discharging process, alkali metal cations are stripped from the current collector and intercalated back into the cathode active material. Thus, there is no alkali metal at the anode side of the as-assembled resp. fully discharged cell. This concept is referred to as an "anode less battery" or an "anode-free battery", cf. Nature Energy | VOL 4 | AUGUST 2019 | 637-638.

Preferred materials capable of reversibly inserting alkali metal on charging and extracting alkali metal on discharging are elements which may form an alloy with an alkali metal (e.g. Si, Ge, Sn, Pb, Sb, Ag, P or In), and alloys comprising an alkali metal (e.g. alloys containing an alkali metal and one or more of Si, Ge, Sn, Pb, Sb, Ag, P and In), e.g. Na₃Sn.

In addition, certain oxides of Si, Ge, Sn, Pb, Sb, Ag, P and In are capable of reversibly inserting alkali metal on charging and extracting alkali metal on discharging. Such materials are known in the art.

Preferred materials capable of reversibly intercalating alkali metal cations on charging and deintercalating alkali metal cations on discharging are e.g. titanate spinel compounds (e.g. Li₄Ti₅O₁₂), hexacyanometallates (especially hexacyanoferrates, also referred to as "Prussian Blue Analogues"), graphite (especially for Li, but not for Na) and amorphous carbon (also referred to as "hard carbon", especially for Na).

Preferred organic conversion materials capable of reversibly uptaking electrons and alkali metal cations on charging and releasing electrons and alkali metal cations on discharging are porphyrins.

In a use of a solid material having a composition according to formula (I) as solid electrolyte in a solid-state battery, wherein the solid material having a composition according to formula (I) is incorporated in the cathode, said cathode preferably comprises an active material selected from the group consisting of
- a material capable of reversibly deintercalating alkali metal cations on charging and intercalating alkali metal cations on discharging
- an organic conversion material capable of reversibly releasing electrons and alkali metal cations on charging and uptaking electrons and alkali metal cations on discharging.

Preferred materials capable of reversibly deintercalating alkali metal cations on charging and intercalating alkali metal cations on discharging are
- oxides of Ni, Co, Mn, Cu, Fe, including mixed oxides, especially layered oxides of said metals,
- polyoxoanionic salts, e.g. phosphates and vanadates, for instance iron phosphate,
- hexacyanometallates (especially hexacyanoferrates, also referred to as "Prussian Blue Analogues"), e.g. Na₂Mn[Fe(CN)₆]).

Preferred organic conversion materials capable of reversibly releasing electrons and alkali metal cations on charging and uptaking electrons and alkali metal cations on discharging are quinones and porphyrines.

The separator comprises one or more solid ion-conducting materials, i.e. solid electrolytes. Said solid electrolyte may be a solid material having a composition according to formula (I).

In a second aspect, the present disclosure relates to a solid-state battery comprising a solid material having a composition according to formula (I) as defined above as a solid electrolyte.

In a solid-state battery according to the second aspect of the present disclosure, the solid material having a composition according to formula (I) may be incorporated in one or more of the following parts of the solid-state battery:
- a separator
- an anode
- a cathode.

For details and preferred embodiments of the separator, the anode and the cathode, the same applies as disclosed above for the first aspect of the present disclosure.

In certain cases, the solid-state battery according to the second aspect is a sodium ion solid-state-battery and the solid electrolyte is a solid material having a composition according to formula (I) wherein A is sodium.

In a third aspect, the present disclosure relates to a part of a solid-state battery according to the second aspect as defined above, wherein said part comprises a solid material having a composition according to formula (I) as defined above and said part is selected from the group consisting of:
- a separator
- an anode
- a cathode
- a composite comprising a separator and one or both of an anode and a cathode.

For details and preferred embodiments of the separator, the anode and the cathode, the same applies as disclosed above for the first aspect of the present disclosure.

When the part of a solid-state battery is or comprises an anode, said anode comprises an active material having a composition not according to formula (I). Said anode preferably comprises an active material selected from the group consisting of
- an alkali metal,
- a material capable of reversibly plating alkali metal on charging and stripping alkali metal on discharging
- a material capable of reversibly inserting alkali metal on charging and extracting alkali metal on discharging
- a material capable of reversibly intercalating alkali metal cations on charging and deintercalating alkali metal cations on discharging
- an organic conversion material capable of reversibly uptaking electrons and alkali metal cations on charging and releasing electrons and alkali metal cations on discharging.

Preferred alkali metals are Li, Na and K.

The material capable of reversibly plating alkali metal on charging and stripping alkali metal on discharging may be the material of the current collector, typically copper. When using an anode material capable of reversibly plating alkali metal on charging and stripping alkali metal on discharging, in the initial state no alkali metal may be present in the anode. During the initial charging process, alkali metal cations are deintercalated from the cathode active material and electrodeposited (i.e. plated) as metallic alkali metal onto the current collector (e.g. Cu). During the subsequent discharging process, alkali metal cations are stripped from the current collector and intercalated back into the cathode active material. Thus, there is no alkali metal at the anode side of the as-assembled resp. fully discharged cell. This concept is referred to as an "anode less battery" or an "anode-free battery", cf. Nature Energy | VOL 4 | AUGUST 2019 | 637-638.

Preferred materials capable of reversibly inserting alkali metal on charging and extracting alkali metal on discharging are elements which may form an alloy with an alkali metal (e.g. Si, Ge, Sn, Pb, Sb, Ag, P or In), and alloys comprising an alkali metal (e.g. alloys containing an alkali metal and one or more of Si, Ge, Sn, Pb, Sb, Ag, P and In), e.g. Na₃Sn.

In addition, certain oxides of Si, Ge, Sn, Pb, Sb, Ag, P and In are capable of reversibly inserting alkali metal on charging and extracting alkali metal on discharging. Such materials are known in the art.

Preferred materials capable of reversibly intercalating alkali metal cations on charging and deintercalating alkali metal cations on discharging are e.g. titanate spinel compounds (e.g. Li₄Ti₅O₁₂), hexacyanometallates not having a composition according to formula (I) (especially hexacyanoferrates, also referred to as "Prussian Blue Analogues"), graphite (especially for Li, but not for Na) and amorphous carbon (also referred to as "hard carbon", especially for Na).

Preferred organic conversion materials capable of reversibly uptaking electrons and alkali metal cations on charging and releasing electrons and alkali metal cations on discharging are porphyrins.

When the part of a solid-state battery is or comprises a cathode, said anode comprises an active material having a composition not according to formula (I). Said cathode preferably comprises an active material selected from the group consisting of
- a material capable of reversibly deintercalating alkali metal cations on charging and intercalating alkali metal cations on discharging
- an organic conversion material capable of reversibly releasing electrons and alkali metal cations on charging and uptaking electrons and alkali metal cations on discharging.

Preferred materials capable of reversibly deintercalating alkali metal cations on charging and intercalating alkali metal cations on discharging are
- oxides of Ni, Co, Mn, Cu, Fe, including mixed oxides, especially layered oxides of said metals,
- polyoxoanionic salts, e.g. phosphates and vanadates, for instance iron phosphate,
- hexacyanometallates (especially hexacyanoferrates, also referred to as "Prussian Blue Analogues") not having a composition according to formula (I). e.g. Na₂Mn[Fe(CN)₆]).

Preferred organic conversion materials capable of reversibly releasing electrons and alkali metal cations on charging and uptaking electrons and alkali metal cations on discharging are quinones and porphyrines.

In certain cases, the part of a solid-state battery according to the third aspect is a part of a sodium ion solid-sate-battery, and the solid electrolyte is a solid material having a composition according to formula (I) wherein A is sodium.

In a fourth aspect, the present disclosure relates to a process for preparing a solid material having a composition according to formula (I) for use as a solid electrolyte.

Said process comprises the steps of
(1) providing a first aqueous solution comprising
   - one or more compounds having a composition according to formula (II)

      A₄M(CN)₆ (II)
   - optionally one or more compounds having a composition according to formula (III)

      A₃M'(CN)₆ (III),
   wherein
   in formula (II), M is one or more selected from the group consisting of divalent metals, preferably selected from Fe, Co, Cr and Mn, most preferably Fe;
   in formula (III), M' is one or more selected from the group consisting of trivalent metals, preferably selected from Fe, Co, Cr and Mn, most preferably Co;
   in formulae (II) and (III), A is one or more selected from the group consisting of the alkali metals, preferably selected from Li, Na and K, most preferably one selected from Li, Na and K;
   so that the molar ratio of M and M' matches formula (I);

   - said aqueous solution further comprising the chloride salt of at least one of the alkali metals A of the compounds having a composition according to formula (II) and formula (III);
(2) adding a second aqueous solution comprising Zn(NO₃)₂ dropwise into the first aqueous prepared in step (1);
   so that the molar ratio of M, M' and Zn matches formula (I);
(3) stirring for a period of 5 to 15 hours, preferably for 10 to 11 hours;
(4) allowing the formed compound having a composition according to formula (I) to separate from the supernatant by precipitation;
(5) drying the precipitated material so that a solid material having a composition according to formula (I) is obtained.

The above-defined process has the major advantage of being an aqueous synthesis.

In step (1) of the process according to the first aspect, a first aqueous solution is provided. Said first aqueous solution comprises one or more compounds having a composition according to formula (II)

A₄M(CN)₆ (II)

wherein
A is one or more selected from the group consisting of the alkali metals, preferably selected from Li, Na and K, most preferably one selected from Li, Na and K;
and M is one or more selected from the group consisting of divalent metals, preferably selected from Fe, Co, Cr and Mn, most preferably Fe.

Preferably, the alkali metal A in formula (II) is one or more selected from the group consisting of Li, Na and K, most preferably the alkali metal A is one selected from Li, Na and K.

Preferably, the divalent metal M in formula (II) is one or more selected from the group consisting of Fe, Co, Cr and Mn. The most preferred divalent metal M is Fe.

Further preferably, in formula (II)
the alkali metal A is one or more selected from the group consisting of Li, Na and K, most preferably one selected from Li, Na and K; and
the divalent metal M is one or more selected from the group consisting of Fe, Co, Cr and Mn, most preferably Fe.

Still further preferably, in formula (II)
the alkali metal A is one selected from Li, Na and K; and
the divalent metal M is Fe.

More preferably, in formula (II)
the alkali metal A is one or more selected from the group consisting of Na and K, most preferably one selected from Na and K; and
the divalent metal M is one or more selected from the group consisting of Fe, Co, Cr and Mn, most preferably Fe.

Still more preferably, in formula (II)
the alkali metal A is one selected from Na and K; and
the divalent metal M is Fe.

The compound having a composition according to formula (II) is an alkali hexacyanoferrate (II) (also referred to as alkali hexacyanidoferrate (II) or alkali hexacyanoferrite).

Specific preferred compounds having a composition according to formula (II) are K₄[Fe(CN)₆], Na₄[Fe(CN)₆] and Li₄[Fe(CN)₆]. Most preferred are K₄[Fe(CN)₆] and Na₄[Fe(CN)₆].

Optionally, said first aqueous solution provided in step (1) further comprises one or more compounds having a composition according to formula (III)

A₃M'(CN)₆ (III)

wherein
A is one or more selected from the group consisting of the alkali metals, preferably one or more selected from Na, Li and K, most preferably A is one selected from Li, Na and K;
and M' is one or more selected from the group consisting of trivalent metals, preferably one or more selected from Fe, Co, Cr and Mn, preferably Co.

Preferably, the alkali metal A in formula (III) is one or more selected from the group consisting of Li, Na and K, most preferably the alkali metal A is one selected from Li, Na and K.

Preferably the trivalent metal M' in formula (III) is one or more selected from the group consisting of Fe, Co, Cr and Mn. Preferably, M' is one or more selected from the group consisting of trivalent metals different from Fe. The most preferred trivalent metal M' is Co.

Further preferably, in formula (III)
the alkali metal A is one or more selected from the group consisting of Li, Na and K, most preferably one selected from Li, Na and K; and
the trivalent metal M' is one or more selected from the group consisting of Fe, Co, Cr and Mn.

Still further preferably, in formula (III)
the alkali metal A is one selected from Li, Na and K; and
the trivalent metal M' is different from Fe.

Especially preferably, in formula (III)
the alkali metal A is one selected from Li, Na and K; and
the trivalent metal M' is Co.

More preferably, in formula (III)
the alkali metal A is one or more selected from the group consisting of Na and K, most preferably one selected from Na and K; and
the trivalent metal M' is one or more selected from the group consisting of Fe, Co, Cr and Mn.

Still more preferably, in formula (III)
the alkali metal A is one selected from Na and K; and
the trivalent metal M' is different from Fe.

Most preferably, in formula (III)
the alkali metal A is one selected from Na and K; and
the trivalent metal M' is Co.

Specific preferred compounds having a composition according to formula (III) are K₃[Co(CN)₆], Na₃[Co(CN)₆] and Li₃[Co(CN)₆]. Most preferred are K₃[Co(CN)₆] and Na₃[Co(CN)₆].

In said first aqueous solution the compounds having a composition according to formulae (II) and (III) are present in amounts so that the molar ratio of Fe and M matches formula (I).

In case a compound having a composition according to formula (II) and a compound having a composition according to formula (III) are present in said first aqueous solution, it is preferable that the alkali metal A is the same in both compounds.

In said first aqueous solution, the total concentration of the compounds having a composition according to formulae (II) and (III) is preferably in the range of from 0.01 mol/L to 2 mol/L, in certain cases 0.01 mol/L to 1 mol/L.

In a process for preparing for preparing a zinc hexacyano metallate according to formula (Ia) as defined above, said first solution comprises one or more compounds having a composition according to formula (II) and one or more compounds having a composition according to formula (III), and the compounds having a composition according to formulae (II) and (III) are present in amounts so that the molar ratio of Fe and M matches formula (I).

In a process for preparing for preparing a zinc hexacyanometallate according to formula (Ia) as defined above, the total concentration of the compounds having a composition according to formula (II) in said first aqueous solution is preferably in the range of from 0.005 mol/L to 1 mol/L, in certain cases 0.005 mol/L to 0.5 mol/L, and the total concentration of the compounds having a composition according to formulae (III) in said first aqueous solution is preferably in the range of from 0.005 mol/L to 1 mol/L, in certain cases 0.005 mol/L to 0.5 mol/L.

In a process for preparing for preparing a zinc hexacyanometallate (II) according to formula (Ib) as defined above, said first solution does not comprise any compound having a composition according to formula (III). In a process for preparing for preparing a zinc hexacyanometallate (II) according to formula (lb) as defined above, the total concentration of compounds having a composition according to formula (II) in said first aqueous solution is preferably in the range of from 0.01 mol/L to 2 mol/L, in certain cases 0.01 mol/L to 1 mol/L.

Said first aqueous solution further comprises the chloride salt of at least one of the alkali metals A of the compounds having a composition according to formula (II) and formula (III). In said first aqueous solution, the total concentration of the chloride salt of at least one of the alkali metals A of the compounds having a composition according to formula (II) and formula (III) is preferably in the range of from 0.1 mol/L to 5 mol/L. Preferably the chloride salt is present in an excess relative to the compounds having a composition according to formula (II) and -if present - formula (III).

In said first aqueous solution, said compound having a composition according to formula (II), said chloride salt and - if present - said compound having a composition according to formula (III) are dissolved in water.

In certain cases, providing said first aqueous solution includes preparing said first aqueous solution.

In step (2) of the above-defined process, a second aqueous solution comprising Zn(NO₃)₂ is added dropwise into said first aqueous solution.

In said second aqueous solution, Zn(NO₃)₂ is dissolved in water.

In said second aqueous solution, the total concentration of Zn(NO₃)₂ is preferably in the range of from 0.01 mol/L to 1 mol/L.

Said second aqueous solution is added to the first aqueous solution in an amount so that the molar ratio of M, M' and Zn matches formula (I).

Preferably, dropwise adding of said second aqueous solution into the first aqueous solution is carried out under stirring, more preferably under vigorous stirring.

Preferably step (2) is carried at room temperature (about 18 °C to 30 °C).

In certain cases, step (2) includes preparing said second aqueous solution.

In step (3) of the above-defined process, the resulting aqueous solution obtained in step (2) is stirred further for a period of 5 to 15 hours, preferably for 10 to 11 hours.

During steps (2) and (3), a compound having a composition according to formula (I) is formed.

In step (4) of the above-defined process, the formed compound having a composition according to formula (I) is allowed to separate from the supernatant by precipitation, so that a precipitated material is formed. This may take 10 min to 120 min. Typically, the precipitated material is in the form of a powder.

In step (5) of the above-defined process, the precipitated material having a composition according to formula (I) obtained in step (4) is dried so that a solid material having a composition according to formula (I) is obtained.

Preferably, drying is carried out under reduced pressure in the range of from 5 kPa to 30 kPa (50 mbar to 300 mbar), most preferably in vacuo.

Surprisingly it has been found that the temperature at which drying is carried out in step (5) has an influence on the ionic conductivity of the obtained solid material having a composition according to formula (I). In order to achieve a high ionic conductivity, drying is preferably carried out at a temperature of 100 °C or less. More preferably, in step (5) drying is carried out at a temperature in the range of from 65 °C to 95 °C, further preferably of from 70 °C to 95 °C, most preferably of from 80 °C to 92 °C.

Especially preferable, drying is carried out under reduced pressure in the range of from kPa to 30 kPa (50 mbar to 300 mbar), most preferably in vacuo, at a temperature in the range of from 65 °C to 95 °C, further preferably of from 70 °C to 95 °C, most preferably of from 80 °C to 92 °C.

It is preferable that the supernatant is removed from the precipitated material having a composition according to formula (I) and the precipitated material having a composition according to formula (I) is washed one to five times with de-ionized water before drying.

In certain cases, for instance for Na₂Zn[Fe(CN)₆], drying temperatures up to 120 °C may be possible.

The dried material solid having a composition according to formula (I) may be readily processed into the desired shape by mechanical shaping, e.g. cold pressing.

The alkali metal A of a solid material having a composition according to formula (I) may be modified by means of ion exchange. To this end, a solid material having a composition according to formula (I) comprising a first alkali metal A is suspended in deionized water and heated to a temperature in the range of from 70 °C to 90 °C, preferably 75 °C to 85 °C. An equivalent amount of the chloride salt of a second alkali metal A' is added and the obtained mixture is left at temperature in the range of from 70 °C to 90 °C, preferably 75 °C to 85 °C for 5 to 15 hours, preferably 8 to 12 hours for the ion exchange to take place.

Preferably the first alkali metal A is Na or K, and the second alkali metal A' is Li.

After the ion exchange, the obtained material having a composition according to formula (I) comprising the second alkali metal A' is dried so that a solid material having a composition according to formula (I) is obtained comprising the second alkali metal A', preferably Li.

Preferably, drying is carried out under reduced pressure in the range of from kPa to 30 kPa (50 mbar to 300 mbar), most preferably in vacuo.

As explained above the temperature at which drying is carried out has an influence on the ionic conductivity of the obtained material having a composition according to formula (I). In order to achieve a high ionic conductivity, drying is preferably carried out at a temperature of 100 °C or less. More preferably, in step (5) drying is carried out at a temperature in the range of from 65 °C to 95 °C, further preferably of from 68 °C to 92 °C, most preferably of from 70 °C to 90 °C.

Especially preferable, drying is carried out under reduced pressure in the range of from kPa to 30 kPa (50 mbar to 300 mbar), most preferably in vacuo, at a temperature in the range of from 65 °C to 95 °C, further preferably of from 68 °C to 92°C, most preferably of from 70 °C to 90 °C.

It is preferable that the supernatant is removed from the precipitated material having a composition according to formula (I) comprising the second alkali metal A' and the precipitated material having a composition according to formula (I) comprising the second alkali metal A' is washed one to five times with de-ionized water before drying.

In a fifth aspect, the present disclosure relates to
a solid material having a composition according to according to formula (la)

A₂₋ₓZn₃[M(CN₆)]₂₋ₓ[M'(CN)₆]ₓ (Ia)

wherein
A is one or more selected from the group consisting of the alkali metals, preferably selected from Li, Na and K, most preferably one selected from Li, Na and K; and
M is one or more selected from the group consisting of divalent metals, preferably selected from Fe, Co, Cr and Mn, most preferably Fe; and
M' is one or more selected from the group consisting of trivalent metals, preferably selected from Fe, Co, Cr and Mn, most preferably Co; and
0 < x < 2, preferably 0.5 ≤ x ≤ 1.5, more preferably 0.9 ≤ x ≤ 1.1.

Preferably, the alkali metal A in formula (la) is one or more selected from the group consisting of Li, Na and K, most preferably the alkali metal A is one selected from Li, Na and K.

Preferably, the divalent metal M in formula (la) is one or more selected from the group consisting of Fe, Co, Cr and Mn. The most preferred divalent metal is Fe.

Preferably, the trivalent metal M' in formula (la) is one or more selected from the group consisting of Fe, Co, Cr and Mn.

Preferably, the solid material has a composition according to formula (la) wherein M is Fe, and M' is one or more selected from the group consisting of trivalent metals different from Fe. The most preferred trivalent metal M' is Co.

Further preferably, in formula (la)
the alkali metal A is one or more selected from the group consisting of Li, Na and K, most preferably one selected from Li, Na and K; and
the divalent metal M is one or more selected from the group consisting of Fe, Co, Cr and Mn; and
the trivalent metal M' is one or more selected from the group consisting of Fe, Co, Cr and Mn.

Still further preferably, in formula (la)
the alkali metal A is one selected from Li, Na and K; and
the divalent metal M is Fe; and
the trivalent metal M' is different from Fe; and
0.5 ≤ x ≤ 1.5, preferably 0.9 ≤ x ≤ 1.1, most preferably x = 1.

Especially preferably, in formula (la)
the alkali metal A is one selected from Li, Na and K; and
the divalent metal M is Fe; and
the trivalent metal M' is Co; and
0.5 ≤ x ≤ 1.5, preferably 0.9 ≤ x ≤ 1.1, most preferably x = 1.

Specific preferred solid materials having a composition according to formula (la) are KZn₃[Fe(CN₆)][Co(CN)₆], NaZn₃[Fe(CN₆)][Co(CN)₆] and LiZn₃[Fe(CN₆)][Co(CN)₆].

A solid material having a composition according to formula (la) may have a garnet-type structure, more specifically a rhombohedral garnet-type structure, typically with space group R-3c. The garnet structure may be determined by powder X-ray diffraction (XRD) measurements as generally known in the art (for details see examples section below).

Without wishing to be bound by any theory, it is presently assumed than in the solid material having a composition according to formula (I) three-dimensional open pore structure is formed by the anions [M(CN)₆]⁴⁻ and [M'(CN)₆]³⁻ with the Zn²⁺ cations. Said three-dimensional open pore structure is capable of intercalating cations of one or more alkali metals A, preferably selected from Li, Na and K.

Moreover, the pores are capable of intercalating water, similar to zeolithes (so called zeolithic water).

A solid material having a composition according to formula (la) may have an ionic conductivity of more than 10⁻⁷ S/cm, preferably of more than 10⁻⁶ S/cm, more preferably of 10⁻⁵ S/cm or more, most preferably of 10⁻⁴ S/cm or more. The ionic conductivity is determined in the usual manner known in the field of battery materials development by means of electrochemical impedance spectroscopy (for details see examples section below).

A solid material having a composition according to formula (la) as defined above may be used as solid electrolyte, especially as a solid electrolyte in a solid-state battery. A solid-state battery may comprise a solid material having a composition according to formula (la) as defined above as a solid electrolyte. For further details of such use and such a solid-state battery, reference is made to the first and the second aspect described above.

A part of a solid-state battery may comprise a solid material having a composition according to formula (la) as defined above, wherein said part is selected from the group consisting of:
- a separator
- an anode
- a cathode
- a composite comprising a separator and one or both of an anode and a cathode.

For further details of such parts of a solid-state battery, reference is made to the third aspect described above.

A solid material having a composition according to formula (la) may be obtained by a process comprising the steps of
(1) providing a first aqueous solution comprising
   - one or more compounds having a composition according to formula (II)

      A₄M(CN)₆ (II)
   - one or more compounds having a composition according to formula (III)

      A₃M'(CN)₆ (III),
   wherein
   in formula (II), M is one or more selected from the group consisting of divalent metals, preferably selected from Fe, Co, Cr and Mn, most preferably Fe;
   in formula (III), M' is one or more selected from the group consisting of trivalent metals, preferably selected from Fe, Co, Cr and Mn, most preferably Co;
   in formulae (II) and (III), A is one or more selected from the group consisting of the alkali metals, preferably selected from Li, Na and K, most preferably one selected from Li, Na and K;
   so that the molar ratio of M and M' matches formula (I);

   - said aqueous solution further comprising the chloride salt of at least one of the alkali metals A of the compounds having a composition according to formula (II) and formula (III);
(2) adding a second aqueous solution comprising Zn(NO₃)₂ dropwise into the first aqueous prepared in step (1),
   so that the molar ratio of M, M' and Zn matches formula (I);
(3) stirring for a period of 5 to 15 hours, preferably for 10 to 11 hours;
(4) allowing the formed compound having a composition according to formula (I) to separate from the supernatant by precipitation;
(5) drying the precipitated material so that a solid material having a composition according to formula (I) is obtained.

In step (1) of the process according to the first aspect, a first aqueous solution is provided. Said first aqueous solution comprises one or more compounds having a composition according to formula (II)

A₄M(CN)₆ (II)

wherein
A is one or more selected from the group consisting of the alkali metals, preferably selected from Li, Na and K, most preferably one selected from Li, Na and K;
and M is one or more selected from the group consisting of divalent metals, preferably selected from Fe, Co, Cr and Mn, most preferably Fe.

Preferably, the alkali metal A in formula (II) is one or more selected from the group consisting of Li, Na and K, most preferably the alkali metal A is one selected from Li, Na and K.

Preferably, the divalent metal M in formula (II) is one or more selected from the group consisting of Fe, Co, Cr and Mn. The most preferred divalent metal M is Fe.

Further preferably, in formula (II)
the alkali metal A is one or more selected from the group consisting of Li, Na and K, most preferably one selected from Li, Na and K; and
the divalent metal M is one or more selected from the group consisting of Fe, Co, Cr and Mn, most preferably Fe.

Still further preferably, in formula (II)
the alkali metal A is one selected from Li, Na and K; and
the divalent metal M is Fe.

More preferably, in formula (II)
the alkali metal A is one or more selected from the group consisting of Na and K, most preferably one selected from Na and K; and
the divalent metal M is one or more selected from the group consisting of Fe, Co, Cr and Mn, most preferably Fe.

Still more preferably, in formula (II)
the alkali metal A is one selected from Na and K; and
the divalent metal M is Fe.

The compound having a composition according to formula (II) is an alkali hexacyanoferrate (II) (also referred to as alkali hexacyanidoferrate (II) or hexacyanoferrite).

Specific preferred compounds having a composition according to formula (II) are K₄[Fe(CN)₆], Na₄[Fe(CN)₆] and Li₄[Fe(CN)₆]. Most preferred are K₄[Fe(CN)₆] and Na₄[Fe(CN)₆].

Said first aqueous solution provided in step (1) further comprises one or more compounds having a composition according to formula (III)

A₃M(CN)₆ (III)

wherein
A is one or more selected from the group consisting of the alkali metals, preferably one or more selected from Na, Li and K, most preferably A is one selected from Li, Na and K;
and M' is one or more selected from the group consisting of trivalent metals, preferably one or more selected from Fe, Co, Cr and Mn, preferably Co.

Preferably, the alkali metal A in formula (III) is one or more selected from the group consisting of Li, Na and K, most preferably the alkali metal A is one selected from Li, Na and K.

Preferably the trivalent metal M' in formula (III) is one or more selected from the group consisting of Fe, Co, Cr and Mn. Preferably, M' is one or more selected from the group consisting of trivalent metals different from Fe. The most preferred trivalent metal M' is Co.

Further preferably, in formula (III)
the alkali metal A is one or more selected from the group consisting of Li, Na and K, most preferably one selected from Li, Na and K; and
the trivalent metal M' is one or more selected from the group consisting of Fe, Co, Cr and Mn.

Still further preferably, in formula (III)
the alkali metal A is one selected from Li, Na and K; and
the trivalent metal M' is different from Fe.

Especially preferably, in formula (III)
the alkali metal A is one selected from Li, Na and K; and
the trivalent metal M' is Co.

More preferably, in formula (III)
the alkali metal A is one or more selected from the group consisting of Na and K, most preferably one selected from Na and K; and
the trivalent metal M' is one or more selected from the group consisting of Fe, Co, Cr and Mn.

Still more preferably, in formula (III)
the alkali metal A is one selected from Na and K; and
the trivalent metal M' is different from Fe.

Most preferably, in formula (III)
the alkali metal A is one selected from Na and K; and
the trivalent metal M' is Co.

Specific preferred compounds having a composition according to formula (III) are K₃[Co(CN)₆], Na₃[Co(CN)₆] and Li₃[Co(CN)₆]. Most preferred are K₃[Co(CN)₆] and Na₃[Co(CN)₆].

In said first aqueous solution the compounds having a composition according to formulae (II) and (III) are present in amounts so that the molar ratio of Fe and M matches formula (I).

It is preferable that the alkali metal A is the same in the compound having a composition according to formula (II) and in the compound having a composition according to formula (III).

In said first aqueous solution, the total concentration of the compounds having a composition according to formulae (II) and (III) is preferably in the range of from 0.01 mol/L to 2 mol/L, in certain cases 0.01 mol/L to 1 mol/L.

More specifically, in said first aqueous solution the total concentration of the compounds having a composition according to formula (II) is preferably in the range of from 0.005 mol/L to 1 mol/L, in certain cases 0.005 mol/L to 0.5 mol/L; and the total concentration of the compounds having a composition according to formulae (III) is preferably in the range of from 0.005 mol/L to 1 mol/L, in certain cases 0.005 mol/L to 0.5 mol/L.

Said first aqueous solution further comprises the chloride salt of at least one of the alkali metals A of the compounds having a composition according to formula (II) and formula (III). In said first aqueous solution, the total concentration of the chloride salt of at least one of the alkali metals A of the compounds having a composition according to formula (II) and formula (III) is preferably in the range of from 0.1mol/L to 5 mol/L. Preferably the chloride salt is present in an excess relative to the compounds having a composition according to formula (II) and formula (III).

In said first aqueous solution, said compound having a composition according to formula (II), said chloride salt and said compound having a composition according to formula (III) are dissolved in water.

In certain cases, providing said first aqueous solution includes preparing said first aqueous solution.

In step (2) of the above-defined process, a second aqueous solution comprising Zn(NO₃)₂ is added dropwise into said first aqueous solution.

In said second aqueous solution, Zn(NO₃)₂ is dissolved in water.

In said second aqueous solution, the total concentration of Zn(NO₃)₂ is preferably in the range of from 0.01 mol/L to 1 mol/L.

Said second aqueous solution is added to the first aqueous solution in an amount so that the molar ratio of Fe, M and Zn matches formula (I).

Preferably, dropwise adding of said second aqueous solution into the first aqueous solution is carried out under stirring, more preferably under vigorous stirring.

Preferably step (2) is carried at room temperature (about 18 °C to 30 °C).

In certain cases, step (2) includes preparing said second aqueous solution.

In step (3) of the above-defined process, the resulting aqueous solution obtained in step (2) is stirred further for a period of 5 to 15 hours, preferably for 10 to 11 hours.

During steps (2) and (3), a compound having a composition according to formula (la) is formed.

In step (4) of the above-defined process, the formed compound having a composition according to formula (la) is allowed to separate from the supernatant by precipitation, so that a precipitated material is formed. This may take 10 min to 120 min. Typically, the precipitated material is in the form of a powder.

In step (5) of the above-defined process, the precipitated material having a composition according to formula (la) obtained in step (4) is dried so that a solid material having a composition according to formula (I) is obtained.

Preferably, drying is carried out under reduced pressure in the range of from kPa to 30 kPa (50 mbar to 300 mbar), most preferably in vacuo.

Surprisingly it has been found that the temperature at which drying is carried out in step (5) has an influence on the ionic conductivity of the obtained solid material having a composition according to formula (la). In order to achieve a high ionic conductivity, drying is preferably carried out at a temperature of 100 °C or less. More preferably, in step (5) drying is carried out at a temperature in the range of from 65 °C to 95 °C, further preferably of from 70 °C to 95 °C, most preferably of from 80 °C to 92 °C.

Especially preferable, drying is carried out under reduced pressure in the range of from 50 kPa to 30 kPa (mbar to 300 mbar), most preferably in vacuo, at a temperature in the range of from 65 °C to 95 °C, further preferably of from 70 °C to 95 °C, most preferably of from 80 °C to 92 °C.

It is preferable that the supernatant is removed from the precipitated material having a composition according to formula (la) and the precipitated material having a composition according to formula (la) is washed one to five times with de-ionized water before drying.

The invention is illustrated further by the following examples which are not limiting.

### Examples

### 1. Material preparation

### Synthesis of Na₂Zn₃[Fe(CN)₆]₂

In a roundbottom flask, 5g (1 eq.) of Na₄Fe(CN)₆*10H₂O and 6 g of NaCl (10 eq.) were dissolved in 200 ml of deionized water to obtain a first aqueous solution (step 1). In a beaker, 2.76 g of Zn(NO₃)₂*6H₂O (0.9) was dissolved in 100 ml deionized water to obtain a second aqueous solution. The second aqueous solution was added dropwise to the first aqueous solution under vigorous stirring at room temperature, over a period of 30 min (step 2). The resulting aqueous solution was left under stirring for 10 hours (step 3) and then left to separate from the supernatant by precipitation (step 4). The supernatant was removed and the obtained white powder was washed three times with deionized water 1:5 ratio by weight of powder to water. The washed powder was dried at the desired temperature (see table 1) in vacuo (step 5).

### Synthesis of NaZn₃[Fe(CN)₆][Co(CN)₆]

In a roundbottom flask, 2.5g (0.5 eq.) of Na₄Fe(CN)₆*10H₂O, 1.71 (0.5eq.) of K₃Co(CN)₆ and 6 g of NaCl (10 eq.) were dissolved in 200 ml of deionized water to obtain a first aqueous solution (step 1). In a beaker, 2.76 g of ZnNO₃*6H₂O was dissolved in 100 ml deionized water to obtain a second aqueous solution. The second aqueous solution was added dropwise to the first aqueous solution under vigorous stirring at room temperature, over a period of 30 min (step 2). The resulting aqueous solution was left under stirring for 10 hours (step 3) and then left to separate from the supernatant by precipitation (step 4). The supernatant was removed and the obtained white powder was washed three times with deionized water 1:5 ratio by wt. of powder to water. The washed powder was dried at the desired temperature (see table 1) in vacuo (step 5).

### Synthesis of K₂Zn₃[Fe(CN)₆]

In a roundbottom flask, 5 g (1 eq.) of K₄Fe(CN)₆*10H₂O and 6 g of KCI (10 eq.) were dissolved in 200 ml of deionized water to obtain a first aqueous solution (step 1). In a beaker, 2.76 g of ZnNO₃*6H₂O (0.9) was dissolved in 100 ml deionized water to obtain a second aqueous solution. The second aqueous solution was added dropwise to the first aqueous solution under vigorous stirring at room temperature, over a period of 30 min (step 2). The resulting solution was left under stirring stir for 10 hours (step 3) and then left to separate from the supernatant by precipitation (step 4). The supernatant was removed and the obtained white powder was washed three times with deionized water 1:5 ratio by weight of powder to water. The washed powder was dried at the desired temperature (see table 1) in vacuo (step 5).

### Synthesis of Li₂Zn₃[Fe(CN)₆]

1 eq. of K₂Zn₃[Fe(CN)₆] was suspended in 100 mL deionized water to obtain an aqueous suspension of the potassium electrolyte. The obtained aqueous suspension was heated to 80 °C and 5 eq. of LiCI was added and dissolved. The suspension was left overnight at 80 °C for the ion exchange. The supernatant was removed and the obtained powder was washed three times with deionized water 1:5 ratio by weight of powder to water. The washed powder was dried at the desired temperature (see table 1) in vacuo.

### 2. Analysis of structure and composition

Powder samples of the synthesized materials having a composition according to formula (I) where analyzed by powder X-ray diffraction in 0.03 mm glass capillaries (Hilgenberg) on a STADI P (STOE) diffractometer in Debye-Scherrer geometry using monochromatic Mo-K_{α1} radiation (*λ* = 0.7093 Å, 50 kV, 40 mA) and equipped with a Mythen 1K detector (DECTRIS). The obtained datasets were analyzed using TOPAS Academic V7. LeBail analysis was applied with a background correction (Chebyshev polynomial with 10 terms). Lattice parameters, zero-shift, axial divergence and crystallize size (Gaussian and Lorentzian contributions) were extracted.

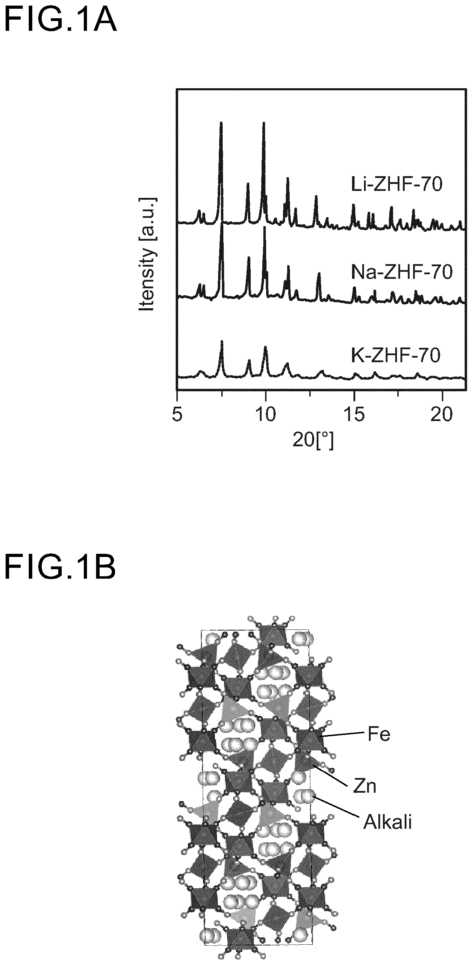

The diffractograms of K₂Zn₃[Fe(CN₆)]₂ dried at 70 °C (bottom, labelled K-ZHF-70), Na₂Zn₃[Fe(CN₆)]₂ dried at 70 °C (middle, labelled Na-ZHF-70) and Li₂Zn₃[Fe(CN₆)]₂ dried at 70 °C (top, labelled Li-ZHF-70) are shown in Figure 1a.

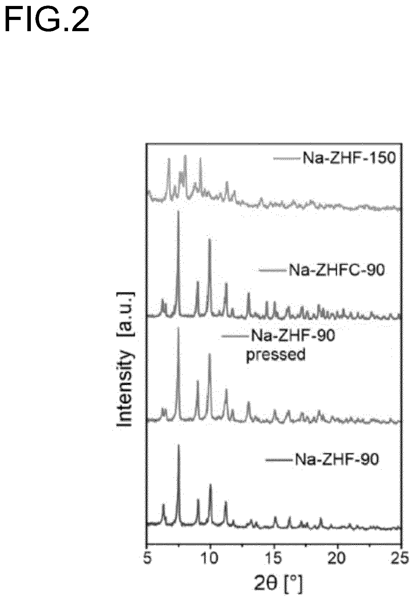

The diffractograms of Na₂Zn₃[Fe(CN₆)]₂ dried at 90°C and NaZn₃[Fe(CN)₆][Co(CN)₆] dried at 90°C are shown in Figure 2 (labelled Na-ZHF-90and Na-ZHFC, resp.).

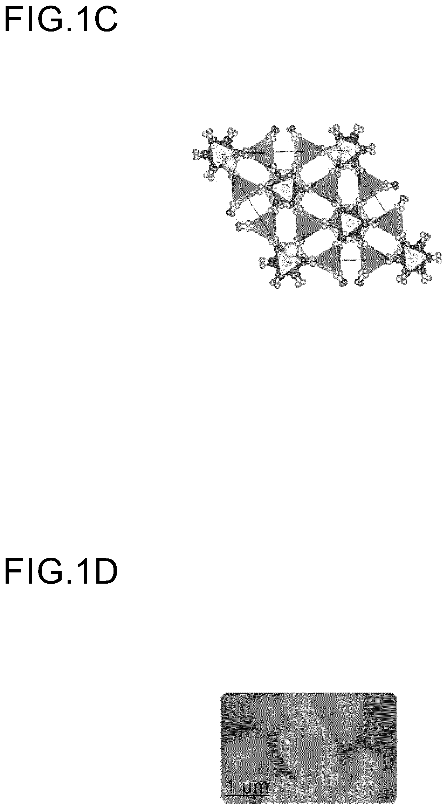

Evidently, all materials exhibit similar diffraction patterns, and LeBail refinement (see Table 1 below) revealed the presence of phase pure garnet-type materials with *R*-3c space-group, which agrees with literature results. An overview of this structure type is given in Figures 1b and c. Each Fe(CN)₆-entity is coordinated by six zinc atoms, which in turn coordinate to iron. The resulting voids are partially occupied (1/6) by ions of alkali metal A to satisfy charge neutrality.

Na₂Zn₃[Fe(CN₆)]₂ was further probed by scanning electron microscopy, which reveals cuboid crystallites of ~1 µm size, as can be seen in Figure 1d.

The unit-cell volumes (see table 1 - in the column "Volume [A3] the number given in brackets indicates the error, referring to the last significant digits. Thus, for instance, 4433.7(20) means 4433.7 +-2.0) are highest for Li₂Zn₃[Fe(CN₆)]₂ and lowest for K₂Zn₃[Fe(CN₆)]₂. At first, this result seems counterintuitive. However, considering the above-mentioned possibility for zeolithic water coordination in the open pore structures of the solid materials, it appears that smaller ions allow for coordination of more zeolithic water, which swells the unit cell.

The unit cell volumes significantly decrease upon increasing the drying temperature from 70 °C to 90 °C, which also points to loss of zeolithic water. However, upon increasing the drying temperature further to 120 °C the unit-cell volumes increase. This may be related to further removal of zeolithic water, which previously shielded electrostatic repulsions within the crystal. Further increasing of the drying temperature to 150 °C leads to the formation of impurity phases, see the diffractogram of Na₂Zn₃[Fe(CN₆)]₂ dried at 150 °C, resp. (Figure 2, top, labelled as Na-ZHF-150).

Furthermore, samples of K₂Zn₃[Fe(CN₆)]₂, Na₂Zn₃[Fe(CN₆)]₂ and Li₂Zn₃[Fe(CN₆)]₂ were probed by ICP-OES (inductively coupled plasma optic emission spectroscopy, which showed Zn:Fe molar ratios of 1.58(±0.11) for Li₂Zn₃[Fe(CN₆)]₂, 1.54(±0.05) for Na₂Zn₃[Fe(CN₆)]₂, and 1.49 (±0.08) for K₂Zn₃[Fe(CN₆)]₂, thus confirming the formation of the described garnet-type structure, rather than cubic Zn₂Fe(CN)₆.

### 3. Ionic conductivity

For Electrochemical Impedance Spectroscopy (EIS) 200 mg powder of K₂Zn₃[Fe(CN₆)]₂, NaZn₃[Fe(CN)₆][Co(CN)₆], Na₂Zn₃[Fe(CN₆)]₂ and Li₂Zn₃[Fe(CN₆)]₂, resp., was compressed in a customized setup having dies of stainless steel and a sleeve of PEEK (10 mm diameter) at 437 MPa for 3 min (cold-pressing). A pressure of 250 MPa was maintained during the measurements. EIS was measured using a SP-200 potentiostat (BioLogic) with a 20 mV voltage amplitude from 0.1 Hz to 7 MHz. The conductivity was determined from fitting the EIS spectra (Residual porosity was not considered).

Upon sample preparation by cold-pressing it was observed that even at very low compacting pressures the materials form a stable pellet, indicating good processability for solid state batteries. The stability of the garnet-type structure was confirmed, after compacting with 437 MPa uniaxial stack pressure, as is shown in Figure 2 (second from the bottom, labelled as "Na-ZHF-90 pressed").

The obtained conductivities are shown in Table 1.

Na₂Zn₃[Fe(CN₆)]₂ shows the overall highest ionic conductivities, which are larger than 10⁻⁴ S/cm after drying to 90 °C, while Li₂Zn₃[Fe(CN₆)]₂ material showed lowest ionic conductivity (0.00034-0.022 mS/cm, depending on the drying temperature). For all materials, a strong dependence of the ionic conductivity on the drying conditions is observed, but the observed trends differ, depending on the alkali metal cation. For K₂Zn₃[Fe(CN₆)]₂ and Li₂Zn₃[Fe(CN₆)]₂ a decrease in ionic conductivity with increasing drying temperature is observed. Na₂Zn₃[Fe(CN₆)]₂ shows the opposite trend: increasing ionic conductivity with increased drying temperature.

For NaZn₃[Fe(CN₆)][Co(CN₆)]₂ a decrease in ionic conductivity with increased drying temperature is observed. After drying at 90 °C in vacuo, an ionic conductivity of 5.1*10⁻⁴ S/cm is measured. Surprisingly, substitution of Fe²⁺ by Co³⁺ has beneficial effects on the ionic conductivity, despite the corresponding reduction of the concentration of alkali metal ions in the material.

**Table 1**

| Composition | Drying temp. [°C] | Molar ratio Zn/Fe from ICP | Volume [Å³] | Conductivity [S/cm] |
|---|---|---|---|---|
| Li₂Zn₃[Fe(CN)₆]₂ | 70 | | 4433.7(20) | 2.2 E-05 |
| Li₂Zn₃[Fe(CN)₆]₂ | 90 | 1.58 | 4421.8(20) | 1.3 E-05 |
| Li₂Zn₃[Fe(CN)₆]₂ | 120 | | 4459.1(60) | 3.4 E-07 |
| Na₂Zn₃[Fe(CN)₆]₂ | 70 | | 4376(2) | 3.1 E-05 |
| Na₂Zn₃[Fe(CN)₆]₂ | 90 | 1.54 | 4332(2) | 1.7 E-04 |
| Na₂Zn₃[Fe(CN)₆]₂ | 120 | | 4445(1) | 2.1 E-04 |
| K₂Zn₃[Fe(CN)₆]₂ | 70 | | 4425(2) | 9.2 E-05 |
| K₂Zn₃[Fe(CN)₆]₂ | 90 | 1.49 | 4292(2) | 1.5 E-05 |
| K₂Zn₃[Fe(CN)₆]₂ | 120 | | 4364(4) | 6.3 E-06 |
| KZn₃[Fe(CN)₆Co(CN)₆] | 90 | | 4394(4) | 5.1 E-4 |
| KZn₃[Fe(CN)₆Co(CN)₆] | 120 | | 4441(2) | 3.5 E-06 |

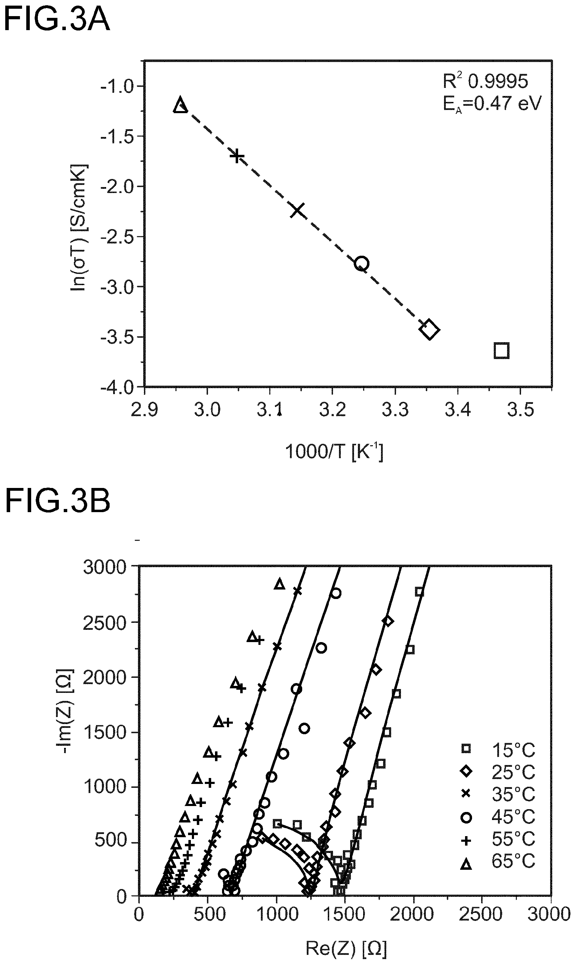

For Na₂Zn₃[Fe(CN₆)]₂ dried at 90 °C, the activation energy of diffusion was determined by variable temperature EIS measurement and the results are shown in Figure 3. As expected, the conductivity virtually follows Arrhenius behavior, although the datapoint for lowest temperature (15 °C) had to be excluded for an optimal fit. The activation energy is determined to be *E*_{A} = 0.47 eV.

### 4. Electrochemical testing

Anode composite 1 was prepared by mixing 95 wt% Na₃Sn powder and 5 wt% of Na₂MnFe(CN)₆ in a mortar. Anode composite 2 was prepared by mixing 30 wt% Li₄Ti₅O₁₂ with 65 wt% Na₃PS₄ and 5 wt% C65 carbon. in a mortar. Cathode composite 1 was prepared by mixing 90 wt% Na₂MnFe(CN)₆ and 10wt% multi-walled carbon nanotubes in a mortar.

Complete cell 1 has an anode comprising 25 mg of anode composite 1 and a cathode comprising 15 mg of cathode composite 1. Complete cell 2 has an anode comprising 50 mg of anode composite 2 and a cathode comprising 15 mg of cathode composite 1.

Symmetric cell 1 has two identical electrodes each comprising 25 mg of anode composite 1. Symmetric cell 2 has two identical electrodes each comprising 15 mg of cathode composite 1.

All cells had a separator made of 150 g Na₂Zn₃[Fe(CN₆)]₂ dried at 90°C.

The cell cross section area was 0.785 cm²in each case.

The cells were cycled under constant uniaxial stack pressure of 81 MPa at 45°C.

The cells were cycled according to the conditions given in Table 2 (CAM means "cathode active material").

| | Anode active material | Cathode active material | Voltage range/V | Time per cycle | Cycles | Current/ mA/g_{CAM} |
|---|---|---|---|---|---|---|
| Complete cell 1 | Na₃Sn | Na₂Mn[Fe(CN)₆] | 1.3-3.8 | (voltage limit) | 2 | 5 |
| | | | | | 2 | 10 |
| | | | | | 2 | 20 |
| Complete cell 2 | Li₄Ti₅O₁₂ | Na₂Mn[Fe(CN)₆] | 0.50-2.75 | (voltage limit) | 40 | 20 |
| Symmetric cell 1 | Na₃Sn | Na₃Sn | > 5V cut off | 30 min - 30 min; charge - discharge | 40 | 0.01 |
| | | | | | 40 | 0.05 |
| | | | | | 40 | 0.1 |
| | | | | | 40 | 0.5 |
| Symmetric cell 2 | Na₂MnFe[(CN)₆] | Na₂MnFe[(CN)₆] | > 5V cut off | 30 min charge - 30 min discharge | 40 | 0.01 |
| | | | | | 40 | 0.05 |
| | | | | | 40 | 0.1 |
| | | | | | 40 | 0.5 |

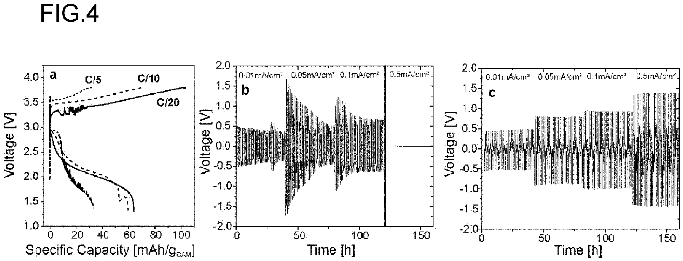

The charge/discharge profiles of the 1 st, 3rd and fifth cycle of complete cell 1 are shown in Figure 4a. In the initial charge process, but also in later stages of the cycling protocol, interruptions of the voltage profile are observed, which are typically associated with dendrite growth. A strong dependence on the cycling speed (C/20, C/10, C/5) is observed, as indicated by the increasing overpotential and thus, reduced capacity at faster cycling rates.

To understand the specific interactions of the Na₂Zn₃[Fe(CN₆)]₂ electrolyte with the anode composite on the one hand and the cathode composite on the other, symmetric cells 1 and 2 as defined above were assembled. The cycling results are shown in Figure 4b and c. For the anode composite (symmetric cell 1, fig. 4b), an overall decreasing trend can be observed upon consecutive cycling at 0.01 to 0.1 mA/cm², while cycling at 0.5 mA/cm² clearly results in an overpotential exceeding 5V, causing a termination of the experiment. For the cathode (symmetric cell 2, fig. 4c) cycling quickly results in the formation of a stable interface, as is evident from the flat overpotential response, which increases from 0.5 V to 1.3 V upon increase in cycling rate from 0.01 mA/cm² to 0.5 mA/cm². These results indicate that most likely the anode composite 1 is the problematic component in complete cell 1.

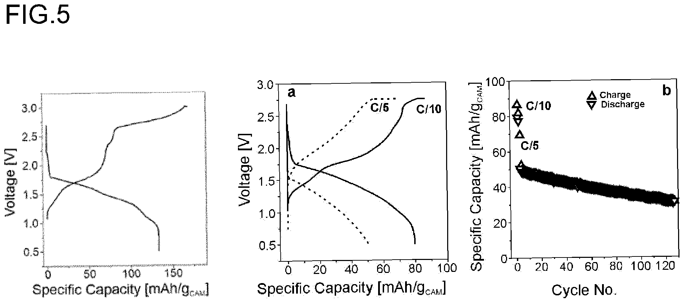

To validate this hypothesis a second complete cell having another anode composite (anode composite 2 as defined above) is tested. The charge/discharge profiles of the 1st, 3rd and fifth cycle of complete cell 2 are shown in figures 5a and 5b. Initially, the voltage range was chosen to be from 0.5 V to 3 V at C/20 (5mA/h), which resulted in charge capacity of q_{Ch.} = 168 mAh/g_{CAM} and discharge capacity of q_{Dis.} = 133 mAh/g_{CAM} (Figure 5a), which indicates irreversible side reactions that persist in the second cycle. Therefore, the voltage range was lowered to 0.5 V to 2.75 V for the subsequent cycles (fig. 5b). Here, lower charge/discharge capacities of q_{Dis}. = 79 mAh/g_{CAM} and q_{Dis.} = 50 mAh/g are measured with C/10 (10mA/g) and C/5 (20mA/g), respectively. Long term cycling (120 cycles, cf. figure 5c) under the latter conditions shows relatively good stability. Complete cell 2 retains 63% capacity after 120 cycles. Complete cell 2 also shows much lower overpotential than complete cell 2. This appears to confirm the observation, that anode composite 1 comprising Na₃Sn is responsible for the poor performance in complete cell 1.

## Claims

1. Use of a solid material having a composition according to formula (I)
A₂₋ₓZn₃[M(CN)₆]₂₋ₓ[M'(CN)₆]ₓ (I)
wherein
A is one or more selected from the group consisting of the alkali metals, and
M is one or more selected from the group consisting of divalent metals, and
M' is one or more selected from the group consisting of trivalent metals, and 0 ≤ x < 2,
as a solid electrolyte.

2. Use according to claim 1, wherein the solid material has a composition according to formula (I) wherein M is Fe, and M' if present is one or more selected from the group consisting of trivalent metals different from Fe.

3. Use according to claim 1 or 2, wherein the solid material has a composition according to formula (I) wherein 0 < x < 2, preferably 0.5 ≤ x ≤ 1.5, more preferably 0.9 ≤ x ≤ 1.1, most preferably x = 1.

4. Use according to claim 1 or 2, wherein the solid material has a composition according to formula (I) wherein 0 = x.

5. Use of a solid material as defined in any of claims 1 to 4 as a solid electrolyte in a solid-state battery.

6. Use according to claim 5, wherein the solid material as defined in any of claims 1 to 4 is incorporated in one or more of the following parts of the solid-state battery:
- a separator
- an anode
- a cathode.

7. Use according to claim 6, wherein
- the solid material as defined in any of claims 1 to 4 is incorporated in the anode, and the anode comprises an active material selected from the group consisting of
- an alkali metal,
- a material capable of reversibly plating alkali metal on charging and stripping alkali metal on discharging
- a material capable of reversibly inserting alkali metal on charging and extracting alkali metal on discharging
- a material capable of reversibly intercalating alkali metal cations on charging and deintercalating alkali metal cations on discharging
- an organic conversion material capable of reversibly uptaking electrons and alkali metal ions on charging and releasing electrons and alkali metal cations on discharging.
and/or
- the solid material as defined in any of claims 1 to 4 is incorporated in the cathode, and the cathode comprises an active material selected from the group consisting of
- a material capable of reversibly deintercalating alkali metal cations on charging and intercalating alkali metal cations on discharging
- an organic conversion material capable of reversibly releasing electrons and alkali metal cations on charging and uptaking electrons and alkali metal cations on discharging.

8. Solid-state battery comprising a solid material as defined in any of claims 1 to 4 as a solid electrolyte.

9. Solid-state battery wherein the solid material as defined in any of claims 1 to 4 is incorporated in one or more of the following parts of the solid-state battery:
- a separator
- an anode
- a cathode.

10. Part of a solid-state battery as defined in any of claims 8 and 9, wherein said part comprises a solid material as defined in any of claims 1 to 4 and said part is selected from the group consisting of:
- a separator
- an anode
- a cathode
- a composite comprising a separator and one or both of an anode and a cathode.

11. Part of a solid-state battery according to claim 10, wherein
- the part is or comprises an anode, wherein said anode comprises an active material having a composition not according to formula (I)
and/or
- the part is or comprises cathode, and the cathode comprises an active material having a composition not according to formula (I).

12. Process for preparing a solid material having a composition according to formula (I) for use as a solid electrolyte according to any of claims 1 to 7, said process comprising the steps of
(1) providing a first aqueous solution comprising
- one or more compounds having a composition according to formula (II)
A₄M(CN)₆ (II)
- optionally one or more compounds having a composition according to formula (III)
A₃M'(CN)₆ (III),
wherein
in formula (II), M is one or more selected from the group consisting of divalent metals,
in formula (III), M' is one or more selected from the group consisting of trivalent metals,
in formulae (II) and (III), A is one or more selected from the group consisting of the alkali metals,
so that the molar ratio of M and M' matches formula (I),
- said aqueous solution further comprising the chloride salt of at least one of the alkali metals A of the compounds having a composition according to formula (II) and formula (III);
(2) adding a second aqueous solution comprising Zn(NO₃)₂ dropwise into the first aqueous prepared in step (1),
so that the molar ratio of M, M' and Zn matches formula (I);
(3) stirring for a period of 5 to 15 hours;
(4) allowing the formed compound having a composition according to formula (I) to separate from the supernatant by precipitation;
(5) drying the precipitated material having a composition according to formula (I).

13. Process according to claim 12, wherein in step (5) drying is carried out at a temperature in the range of from 65 °C to 95 °C, preferably of from 80 °C to 92 °C.

14. Solid material having a composition according to formula (la)
A₂₋ₓZn₃[M(CN)₆]₂₋ₓ[M'(CN)₆]ₓ (Ia)
wherein
A is one or more selected from the group consisting of the alkali metals, and
M is one or more selected from the group consisting of divalent metals, and
M' is one or more selected from the group consisting of trivalent metals, 0 < x < 2.

15. Solid material according to claim 14, wherein in formula (la)
M is Fe, and
M' is one or more selected from the group consisting of trivalent metals different from Fe.
